# EUROPÄISCHE PATENTSCHRIFT

(11) **EP 2 773 873 B1**
(45) Veröffentlichungstag und Bekanntmachung des Hinweises auf die Patenterteilung: **02.03.2016**
(21) Anmeldenummer: 12816281.5
(22) Anmeldetag: 21.12.2012
(51) Int. Cl.: F04D 29/063, F02C 7/06, F04D 29/056

(54) **LAGERSYSTEM FÜR EINEN TURBOVERDICHTER UND TURBOVERDICHTER MIT DEM LAGERSYSTEM**
BEARING SYSTEM FOR A TURBOCOMPRESSOR AND TURBOCOMPRESSOR HAVING THE BEARING SYSTEM
SYSTÈME DE PALIER POUR TURBOCOMPRESSEUR, ET TURBOCOMPRESSEUR PRÉSENTANT UN SYSTÈME DE PALIER

(30) Priorität: 22.12.2011 DE 102011089647
(43) Veröffentlichungstag der Anmeldung: 10.09.2014
(73) Patentinhaber: Siemens Aktiengesellschaft, 80333 München (DE)
(72) Erfinder: ALFES, Ludger, 46282 Dorsten (DE); TENBROCK, Rolf, 48683 Ahaus (DE)
(86) Internationale Anmeldenummer: PCT/EP2012/076687
(87) Internationale Veröffentlichungsnummer: WO 2013/093023

(56) Entgegenhaltungen:
- EP-A1- 0 718 541
- EP-A1- 1 063 430
- FR-A- 1 208 696
- US-A- 4 822 240
- US-A- 5 481 887

## Beschreibung

Die Erfindung betrifft ein Lagersystem für einen Turboverdichter und einen Turboverdichter mit dem Lagersystem.

Ein Turboverdichter wird zur Verdichtung eines Prozessgases in einem verfahrenstechnischen Prozess eingesetzt. Der Turboverdichter weist einen Rotor auf, der mit Lagern außerhalb eines den Rotor umschließenden Gehäuses gelagert ist. Da beim Betrieb des Turboverdichters zwischen dem Rotor und dem Gehäuse eine Relativbewegung vorherrscht, ist an der Stelle, an der die Welle des Rotors vom Inneren des Gehäuses nach außen tritt, ein Spalt vorzuhalten. Der Spalt ist mit einer Wellendichtung zu überbrücken, um eine Leckage des Prozessgases vom Inneren des Turboverdichters nach außen zu unterbinden oder zumindest akzeptabel klein zu halten. Ist das Prozessgas brennbar, toxisch und/oder umweltgefährdend, sind die Anforderungen an die Wellendichtung hinsichtlich deren Abdichtwirkung hoch. Es ist bekannt für die Lager ölgeschmierte Gleitlager, insbesondere ölgeschmierte Kippsegmentgleitlager, einzusetzen. Die Auslegung der Gleitlager ist auf die Betriebsdrehzahl und die Rotordynamik des Rotors abgestimmt, wobei die Wellendichtung und das Lager auf der Welle unmittelbar benachbart angeordnet sind.

In einem Kreisprozess, wie beispielsweise einem Kältekreislauf, werden hohe Ansprüche an die Wellendichtung gestellt. Die Leckagen von dem Prozessgas aus dem Turboverdichter sind auf ein Minimum zu begrenzen. Ist beispielsweise die Wellendichtung als eine Flüssigdichtung ausgeführt, die beispielsweise mit einem Sperröl gesperrt wird, ist das Sperröl als chemisch verträglich mit dem Kältemittel auszuwählen. Herkömmlich wird das Sperröl auch als das Schmieröl für die Lager verwendet, so dass der Turboverdichter von einem kombinierten Schmier-/Sperrölsystem versorgt wird, wobei das Sperröl auch zum Schmieren und Kühlen der Lager geeignet sein muss, wodurch das Sperröl vielseitige Anforderungen zu erfüllen hat. Beispielsweise kann Mineralöl als das Sperröl zum Schmieren der Lager und zum Sperren der Wellendichtungen ungeeignet sein, da das Mineralöl mit dem im Kälteprozess verwendeten Kältemittel nicht verträglich sein kann. Abhilfe schaffen spezielle synthetische Öle, die jedoch stark hygroskopisch sind und daher nicht mit der Luftfeuchtigkeit der Außenatmosphäre in Verbindung gebracht werden dürfen.

Aus der EP 0 718 541 A1 ist ein Verfahren und eine Vorrichtung zur Eigenschmierung der Wälzlager von Turbomaschinen bekannt. Dabei werden in der Turbomaschine vorhandene Druckdifferenzen zum Ansaugen des Schmieröls genutzt. Außerdem wird der in den Zentrifugen aufgebaute Druck zur direkten Einspritzung des Schmieröls in die Wälzlager verwendet. Dazu ist das den Unterdruck aufprägende, ringförmige Element stillstehend auf der Welle angeordnet und als Unterdruckkammer ausgebildet. Die Unterdruckkammer ist über die Ölansaugleitung mit dem Ölsumpf und über eine erste Luftleitung mit dem einem Unterdruckbereich der Turbomaschine verbunden. Der Ölsumpf steht über eine zweite Luftleitung mit dem Überdruckbereich der Turbomaschine in Verbindung.

Aus der US 4,822,240 A ist ein Verdichter bekannt, der einen Rotor aufweist. Der Rotor ist auf der Eingangsseite Prozessfluid mit hohem Druck ausgesetzt und auf der anderen Seite Atmosphärendruck ausgesetzt. Damit ergibt sich ein Kräfteungleichgewicht in axialer Richtung, wofür Axiallager gebildet sind, die für dynamische Betriebsbedingungen ausgelegt sind. Beim Start und beim Abschalten, also bei Perioden mit niedriger Geschwindigkeit, ist das Kräfteungleichgewicht ausgeprägt. Die Erfindung nutzt erhältliche Hochdruckdichtungsflüssigkeit, um eine geschlossene Betriebskammer auch bei Betrieb mit niedriger Geschwindigkeit zu erreichen.

Auch aus der FR 1.208.696 A ist eine Turbomaschine bekannt, mit Lagern, die mit Schmiermittel geschmiert werden.

Aufgabe der Erfindung ist es, ein Lagersystem für einen Turboverdichter und einen Turboverdichter mit dem Lagersystem zu schaffen, wobei der Turboverdichter sicher bei einer geringen Leckage an Prozessgas gelagert ist.

Die Aufgabe wird gelöst mit den Merkmalen der Patentansprüche 1 und 10. Bevorzugte Ausgestaltungen dazu sind in den weiteren Patentansprüchen angegeben.

Das erfindungsgemäße Lagersystem für den in einem Prozess zum Verdichten eines Prozessgases integrierten Turboverdichter weist ein mit einem Schmierfluid geschmiertes Lager zur Lagerung eines Rotor des Turboverdichters, eine atmosphärenseitige Wellendichtung, mit der das Lager zur Atmosphäre hin isoliert ist, und einen Sammeltank zur Bereitstellung des Schmierfluids für das Schmieren des Lagers auf, der eine Rücklaufleitung für den Rücklauf des Schmierfluids von dem Lager zu dem Sammeltank und eine Beaufschlagungsleitung aufweist, die an den Prozess derart ist, dass das Schmierfluid in dem Sammeltank von dem Prozessgas und somit die Rücklaufleitung mit einem Überdruck beaufschlagbar ist. Der erfindungsgemäße Turboverdichter weist das Lagersystem auf.

Dabei weist der Sammeltank eine Rückführleitung auf, die an den Prozess derart anschließbar ist, dass zum Konstanthalten des Überdrucks in dem Sammeltank überschüssiges Prozessgas in den Prozess zurückführbar ist.

Hierbei ist es bevorzugt, dass in der Rückführleitung eine Filtereinrich-tung vorgesehen ist, um Schmierfluid aus dem Prozessgas zu filtern. Die Beaufschlagungsleitung weist ferner bevorzugt ein Drosselorgan und/oder die Rückführleistung weist ferner bevorzugt eine Aufdrückeinrichtung auf. Die Aufdrückeinrichtung ist bevorzugt ein Kolbenverdichter.

Ferner ist es bevorzugt, dass das Lagersystem eine prozessseitige Wellendichtung aufweist, mit der das Lager zur Prozessseite hin isoliert ist und für die eine Zuführleitung vorgesehen ist, via die Schmierfluid zum Sperren der prozessseitigen Wellendichtung zu dieser förderbar ist. Das Lagersystem weist bevorzugt ein Lagerdichtungsgehäuse auf, in dem das Lager und die Wellendichtungen untergebracht sind und das bis auf Zu- und Abläufe geschlossen ist. Das Lagersystem weist außerdem bevorzugtermaßen eine Leckageabführleitung auf, mit der eine Leckage aus Prozessgas und Schmierfluid von der prozessseitigen Wellendichtung zu dem Sammeltank führbar ist. In der Leckageabführleitung ist bevorzugt ein Abscheider zum Abscheiden des Schmierfluids von der Leckage vorgesehen, das via die Leckageabführleitung in den Sammeltank förderbar ist. Der Abscheider ist mit dem Prozess bevorzugt derart gekoppelt, dass das von dem Abscheider getrennte Prozessgas dem Prozess zuführbar ist.

Erfindungsgemäß ist die Rücklaufleitung von dem Prozessgas mit dem Überdruck beaufschlagt, dadurch fließt das Schmierfluid von dem Lager mit dem Überdruck ab. Der Überdruck ist so dimensioniert, dass im Betrieb des Turboverdichters ein Trockenlaufen aufgrund der Fliehkraftwirkung auf das Schmierfluid in dem Lager unterbunden ist. Dadurch, dass das Schmierfluid mit dem Prozessgas druckbeaufschlagt ist und mit der atmosphärenseitigen Wellendichtung das Lager zur Atmosphäre hin isoliert ist, ist ein atmosphärischer Kontakt des Schmierfluids unterbunden. Dabei kann es vorteilhaft unbeachtlich bleiben, ob beispielsweise das Schmierfluid hygroskopischer Art ist, die ein Kontakt zur Atmosphäre verbieten würde. Insbesondere die hygrokopischen Schmierfluide sind für einen Kälteprozess geeignet, so dass das erfindungsgemäße Lagersystem zum Einsatz in dem Kälteprozess geeignet ist.

Im Allgemeinen ist es erstrebenswert, dass der Kälteprozess eine möglichst geringe Leckage von Kältemittel zur Atmosphäre hat, da die Leckage die Umwelt belastet und der Kältekreisprozess um die Leckagemengen mit dem Kältemittel wieder aufgefüllt werden muss. Die Leckagerate des erfindungsgemäßen Lagersystems ist gering, da es durch die atmosphärenseitige Wellendichtung und der Prozessgasbeaufschlagung des Sammeltanks von der Atmosphäre hermetisch dicht abgeschlossen ist, wobei durch die Rückführung von mit dem Prozessgas kontaminierten Schmierfluid in den Sammeltank das darin ausgegaste Prozessgas in den Prozess rückführbar ist. Durch das Aufrechterhalten des Überdrucks in dem Sammeltank wird vorteilhaft ein Eindringen von Feuchtigkeit aus der Atmosphäre in den Sammeltank unterbunden, wodurch die Funktionalität des Schmierfluids zum Schmieren des Lagers und zum Sperren der atmosphärenseitigen Wellendichtung und/oder der prozessseitigen Wellendichtung sichergestellt ist. Außerdem ist das mit dem Überdruck beaufschlagte Lagerdichtungsgehäuse geeignet eine ausreichende Schmierung bei einem Notauslauf des Turboverdichters sicherzustellen.

Mit Hilfe der atmosphärenseitigen Wellendichtung und der prozessseitigen Wellendichtung ist das Lager beidseitig zur Prozessseite und zur atmosphärischen Seite hin mit jeweils einer der Wellendichtungen versehen. Bevorzugt ist für die prozessseitige Wellendichtung eine doppelt wirkende Gleitringdichtung und für die atmosphärenseitige Wellendichtung eine einfach wirkende Gleitringdichtung. Bevorzugtermaßen ist für jede Wellendichtung und dem Lager eine separate Zuführung von dem Schmierfluid vorgesehen. Der Druck des Schmierfluids, das zum Sperren der prozessseitigen, doppelt wirkenden Gleitringdichtung verwendet wird, wird so geregelt, dass der Druck des Schmierfluids in jedem Betriebspunkt des Turboverdichters oberhalb des Abdichtdrucks des Turboverdichters liegt. Der dadurch erforderliche Druck des Schmierfluids wird unter anderem mittels Restriktionsblenden in der Rücklaufleitung der doppelt wirkenden Gleitringdichtung erzeugt. Die Lager und die einfach wirkende Gleitringdichtung werden jeweils mit einer konstanten Schmierfluidmenge zum Beispiel über Restriktionsblenden im Vorlauf versorgt. Das geschlossene Gehäuse ist komplett mit dem Schmierfluid gefüllt. Durch den Überdruck in dem Lagerdichtungsgehäuse wird das Trockenlaufen der einfach wirkenden Gleitringdichtung unterbunden.

Mit dem erfindungsgemäßen Lagersystem ist eine geringe Leckage von dem Prozessgas in die Atmosphäre erzielt. Durch die hermetische Abdichtung des Lagersystems ist ein Kontakt des Schmierfluids zur Atmosphäre unterbunden. Außerdem ist das Lagersystem erfindungsgemäß mit dem Überdruck beaufschlagt, so dass der Turboverdichter gute Notlaufeigenschaften hat. Der Überdruck in dem Lagersystem wird durch Ausdampfen des Prozessgases aus dem Schmierfluid erzeugt, das in den Prozess zurückführbar ist, ohne dass es in die Atmosphäre zu gelangen braucht.

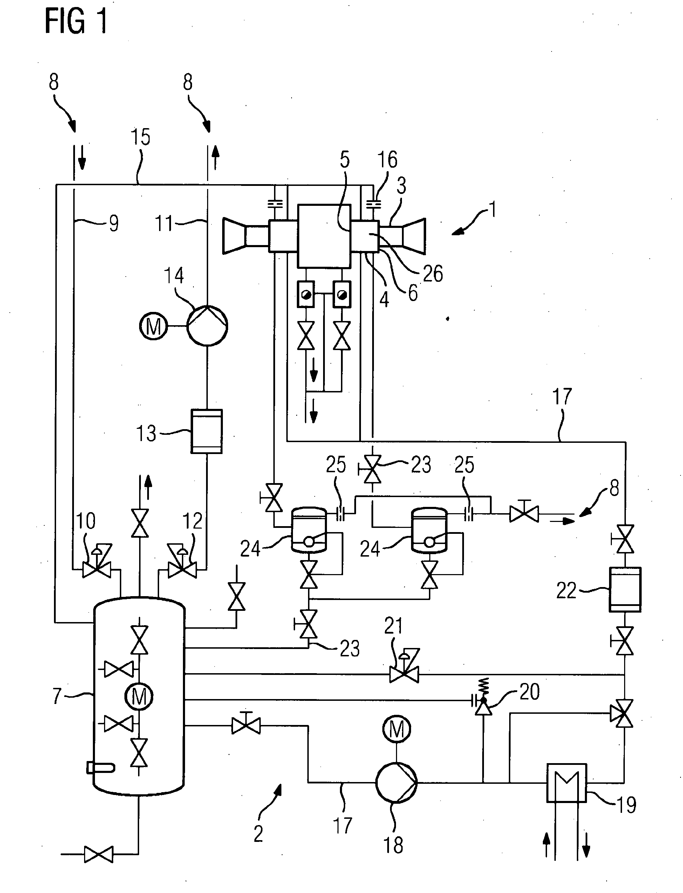

Im Folgenden wird eine bevorzugte Ausführungsform des erfindungsgemäßen Turboverdichters mit dem erfindungsgemäßen Lagersystem anhand der beigefügten schematischen Zeichnung erläutert. Es zeigt
Figur 1 ein Rohrleitungs- und Instrumentenfließschema des Turboverdichters mit dem Lagersystem und

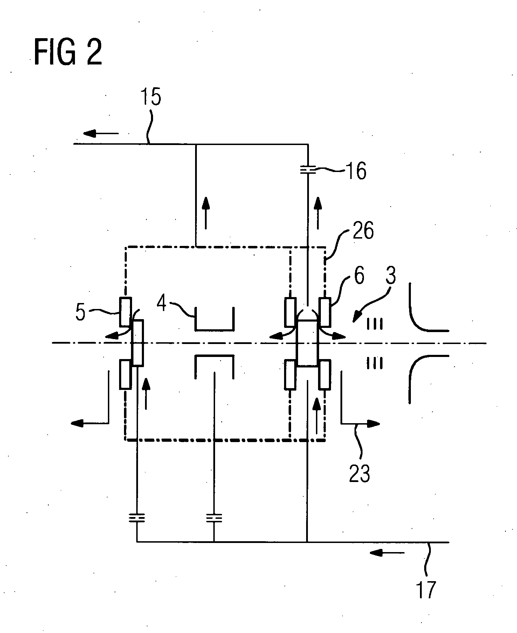

Figur 2 einen Ausschnitt aus Figur 1, der den rechten Bereich des Turboverdichters zeigt.

Wie es aus den Figuren ersichtlich ist, weist ein Turboverdichter 1 ein Lagersystem 2 auf. Der Turboverdichter 1 ist in einen Prozess zum Verdichten von Prozessgas integriert. Der strömungsmechanisch wirksame Bereich des Turboverdichters 1 ist die Prozessseite 3, die gegenüber der Atmosphäre abgegrenzt ist. Ein Rotor des Turboverdichters 1 ist mit einem Lager 4 gelagert, das außerhalb der Prozessseite 3 angeordnet ist. Das Lager 4 ist zur Atmosphäre hin mit einer atmosphärenseitigen Wellendichtung 5 und zur Prozessseite 3 hin mit einer prozessseitigen Wellendichtung 6 isoliert. Dadurch ist mit den Wellendichtungen 5, 6 das Lager 4 gegenüber der Atmosphäre und dem Prozess 8 hermetisch abgedichtet. Das Lager 4 und die Wellendichtungen 5, 6 sind in einem Lagerdichtungsgehäuse 26 integriert, das bis auf Zu- und Abläufe geschlossen ist.

Das Lagersystem 2 weist ferner einen Sammeltank 7 auf, in dem ein Schmieröl als ein Schmierfluid bereitgestellt ist. Der Sammeltank 7 ist im Allgemeinen nicht vollständig mit dem Schmieröl gefüllt, so dass das Schmieröl in dem Sammeltank 7 eine freie Oberfläche hat. Oberhalb der freien Oberfläche des Schmieröls mündet eine Beaufschlagungsleitung 9 kopfseitig in den Sammeltank 7, die mit dem Prozess 8 verbunden ist. In der Beaufschlagungsleitung 9 ist ein Beaufschlagungsregelventil 10 vorgesehen, so dass Prozessgas von dem Prozess 8 via das Beaufschlagungsregelventil 10 druckgeregelt mit dem Prozessgas beaufschlagt ist. Das Beaufschlagungsregelventil 10 drosselt den Druck des Prozessgases vom Prozess 8 derart, dass in dem Sammeltank 7 ein vorherbestimmter Überdruck herrscht. Ferner mündet kopfseitig in den Sammeltank 7 eine Rückführleitung 11, die ein Rückführregelventil 12 aufweist, wobei in der Rückführleitung 11 ein Rückführfilter 13 und ein als eine Aufdrückeinrichtung vorgesehener Kolbenverdichter 14 eingebaut ist.

Das Beaufschlagungsregelventil 10 und das Rückführregelventil 12 sind derart aufeinander abgestimmt, dass in dem Sammeltank 7 stets der vorherbestimmte Überdruck herrscht. Via die Beaufschlagungsleitung 9 und dem Beaufschlagungsregelventil 10 ist von dem Prozess 8 das Prozessgas in den Sammeltank 7 nachführbar, wohingegen via die Rückführleitung 11, das Rückführregelventil 12, den Rückführfilter 13 und den Kolbenverdichter 14 überschüssiges Prozessgas aus dem Sammeltank 7 in den Prozess 8 rückführbar ist. Mit dem Kolbenverdichter 14 ist der zwischen dem Sammeltank 7 und dem Prozess 8 herrschende Druckunterschied überwindbar, wobei mit dem Rückführfilter 13 eine Kontamination mit dem Schmieröl herausfilterbar ist.

An dem Lager 4 ist eine Rücklaufleitung 15 vorgesehen, via die das Schmieröl von dem Lager 4 zu dem Sammeltank 7 geführt ist. Dadurch, dass in dem Sammeltank 7 der Überdruck herrscht, herrscht am Ablauf des Lagers 4 ebenfalls der Überdruck, so dass das Lager 4 mit dem Schmieröl stets druckbeaufschlagt ist. Die atmosphärenseitige Wellendichtung 5 ist mit dem Schmieröl gesperrt, wobei die durch die atmosphärenseitige Wellendichtung 5 austretende Leckage von der Rücklaufleitung 15 in einem Behälter gesammelt wird.

Zur Versorgung des Lagers 4 und der Wellendichtungen 5, 6 weist das Lagersystem 2 eine Zuführleitung 17 auf, die in den Sammeltank 7 mündet. In der Zuführleitung 17 ist eine Pumpe 18 zum Fördern des Schmieröls aus dem Sammeltank 7 eingebaut, stromab der in der Zufuhrleitung 17 ein Kühler 19 zum Kühlen des Schmieröls eingebaut ist. Zur Drucksteuerung in der Zuführleitung 17 sind ein Überströmventil 20 und ein Druckhalteventil 21 eingebaut, wobei das Überströmventil 20 an der Druckseite der Pumpe 18 eine Rückführung zum Sammeltank 7 bereitstellt und mit dem Druckhalteventil 21 stromab des Kühlers 19 überschüssiges Schmieröl zum Sammeltank 7 zurückführbar ist. Ferner ist in der Zuführleitung 17 ein Zuströmfilter 22 eingebaut, mit dem das Schmieröl filterbar ist, bevor es in die Wellendichtungen 5, 6 und das Lager 4 eintritt.

Zum Abführen der Leckage von der prozessseitigen Wellendichtung 6 ist eine Leckageabführleitung 23 vorgesehen, die via einen Abscheider 24 zurück zum Sammeltank 7 führt. Die aus der prozessseitigen Wellendichtung 6 austretende Leckage ist Schmieröl und wird mit Prozessgas kontaminiert. Das Prozessgas wird in dem Abscheider 24 abgetrennt und via eine Abscheideblende 25 zum Prozess 8 zurückgeführt. In dem vom Abscheider 24 separierten Schmierfluid ist Prozessgas gelöst und wird dem Sammeltank 7 zugeführt. Dort gast das mit dem Prozessgas kontaminierte Schmieröl aus, wodurch überflüssiges Prozessgas via die Rückführleitung 11 zurück zum Prozess 8 führbar ist.

Das Lagersystem 2 ist zum Schmieren des Lagers 4 und zum Sperren der Wellendichtungen 5, 6 mit dem Schmieröl ausgebildet. Das Schmieröl wird über die Pumpe 18, die bevorzugt von einem Elektromotor angetrieben wird, aus dem Sammeltank 7 gesaugt und auf Druck gebracht. Mit dem Überströmventil 20 ist das Lagersystem 2 gegen einen zu hohen Überdruck stromab der Pumpe 20 abgesichert. Mit dem Kühler 19 wird das Schmieröl gekühlt, da sich aufgrund von Reibung im Lager 4 und den Wellendichtungen 5, 6 das Schmieröl erwärmt haben kann. Das Druckhalteventil 21 ist in eine Bypassleitung zurück zum Sammeltank 7 eingebaut, wodurch der erforderliche Druck des Schmieröls durch Überströmen einer Teilmenge der Fördermenge der Pumpe 18 geregelt ist. Alternativ zum Druckhalteventil 21 wäre eine Drehzahlregelung der Pumpe 18 bzw. ihres Antriebs denkbar.

Das aus der prozessseitigen Wellendichtung 6 via die Leckageabführleitung 23 abgeführte, mit dem Prozessgas kontaminierte Schmieröl wird zu dem Abscheider 24 geführt. Beim Eintritt des von dem Abscheider 24 abgetrennten und mit dem Prozessgas kontaminierten Schmieröls in den Sammeltank wird es entspannt und erwärmt, da die Temperatur im Sammeltank 7 in der Regel höher als die des eintretenden Schmieröls ist. Durch dieses Entspannen und Erwärmen dampft das restliche in dem Schmieröl gelöste Prozessgas aus und erzeugt dadurch einen Überdruck im Sammeltank 7. Wenn der vorherbestimmte Überdruck im Sammeltank 7 erreicht ist, spricht das Rückführventil 12 an und hält den Druck in dem Sammeltank 7 auf den vorherbestimmten Wert konstant. Das durch das Rückführregelventil 12 abgeführte Prozessgas kann sicher über den Rückführfilter 13, der bevorzugt als ein Coalescer-Filter ausgeführt ist, via den Kolbenverdichter 14 dem Prozess 8 zugeführt werden. Alternativ ist es denkbar, dass via das Rückführregelventil 12 das Prozessgas einem Entsorgungssystem zugeführt wird. Alternativ zu dem Kolbenverdichter 14 ist ein Ejektor zur Druckerhöhung denkbar.

Damit der vorherbestimmte Überdruck in dem Sammeltank 7 und der Rücklaufleitung 15 stets aufrecht erhalten ist, ist der Sammeltank 7 via das Beaufschlagungsregelventil 10 an den Prozess 8 gekoppelt. Dadurch wird der Sammeltank 7 vom Prozess 8 stets mit notwendigem Prozessgas versorgt. Dies ist insbesondere dann notwendig, wenn der Prozess angefahren oder abgefahren wird. Bei Ausfall der Pumpe 18 ist die Schmierung des Lagers 4 und das Sperren der Wellendichtungen 5, 6 durch ein geschlossenes Gehäuse sichergestellt, in dem das Lager 4 und die Wellendichtungen 5, 6 eingebaut sind.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann heraus abgeleitet werden, ohne den Schutzumfang der Erfindung zu verlassen.

## Patentansprüche

1. Lagersystem für einen in einem Prozess (8) zum Verdichten eines Prozessgases integrierten Turboverdichter (1), mit einem mit einem Schmierfluid geschmierten Lager (4) zur Lagerung eines Rotors des Turboverdichters (1), einer atmosphärenseitigen Wellendichtung (5), mit der das Lager (4) zur Atmosphäre hin isoliert ist, und einem Sammeltank (7) zur Bereitstellung des Schmierfluids für das Schmieren des Lagers (4), der eine Rücklaufleitung (15) für den Rücklauf des Schmierfluids von dem Lager (4) zu dem Sammeltank (7) und eine Beaufschlagungsleitung (9) aufweist, die an den Prozess (8) derart anschließbar ist, dass das Schmierfluid in dem Sammeltank (7) von dem Prozessgas und somit die Rücklaufleitung (15) mit einem Überdruck beaufschlagbar ist, **dadurch gekennzeichnet, dass** der Sammeltank (7) eine Rückführleitung (11) aufweist, die an den Prozess (8) derart anschließbar ist, dass zum Konstanthalten des Überdrucks in dem Sammeltank (7) überschüssiges Prozessgas in den Prozess (8) zurückführbar ist.

2. Lagersystem gemäß Anspruch 1,
wobei in der Rückführleitung (11) eine Filtereinrichtung (13) vorgesehen ist, um Schmierfluid aus dem Prozessgas zu filtern.

3. Lagersystem gemäß Anspruch 1 oder 2,
wobei die Beaufschlagungsleitung (9) ein Drosselorgan (10) und/oder die Rückführleitung (11) eine Aufdrückeinrichtung (14) aufweist.

4. Lagersystem gemäß Anspruch 3,
wobei die Aufdrückeinrichtung (14) ein Kolbenverdichter ist.

5. Lagersystem gemäß einem der Ansprüche 1 bis 4,
wobei das Lagersystem (2) eine prozessseitige Wellendichtung (6) aufweist, mit der das Lager (4) zur Prozessseite (3) hin isoliert ist und für die eine Zuführleitung (17) vorgesehen ist, via die Schmierfluid zum Sperren der prozessseitigen Wellendichtung (6) zu dieser förderbar ist.

6. Lagersystem gemäß Anspruch 5,
wobei das Lagersystem (2) ein Lagerdichtungsgehäuse (26) aufweist, in dem das Lager (4) und die Wellendichtungen (5, 6) untergebracht sind und das bis auf Zu- und Abläufe geschlossen ist.

7. Lagersystem gemäß Anspruch 5 oder 6,
wobei das Lagersystem (2) eine Leckageabführleitung (23) aufweist, mit der eine Leckage aus Prozessgas und Schmierfluid von der prozessseitigen Wellendichtung (6) zu dem Sammeltank (7) führbar ist.

8. Lagersystem gemäß Anspruch 7,
wobei in der Leckageabführleitung (23) ein Abscheider (24) zum Abscheiden des Schmierfluids von der Leckage vorgesehen ist, das via die Leckageabführleitung (23) in den Sammeltank (7) förderbar ist.

9. Lagersystem gemäß Anspruch 8,
wobei der Abscheider (24) mit dem Prozess (8) derart gekoppelt ist, dass das von dem Abscheider (24) abgetrennte Prozessgas dem Prozess (8) zuführbar ist.

10. Turboverdichter mit einem Lagersystem (2) gemäß einem der Ansprüche 1 bis 9.

## Claims

1. Bearing system for a turbocompressor (1) integrated into a process (8) for compressing a process gas, having a bearing (4), lubricated with a lubricating fluid, for bearing a rotor of the turbocompressor (1), an atmosphere-side shaft seal (5) which isolates the bearing (4) from the atmosphere, and a collecting tank (7) for providing the lubricating fluid for lubricating the bearing (4), which has a return flow line (15) for the return flow of the lubricating fluid from the bearing (4) to the collecting tank (7) and a charge line (9) which can be connected to the process (8) such that the lubricating fluid in the collecting tank (7) can be acted on by the process gas and thus the return flow line (15) can be acted on with an overpressure, **characterized in that** the collecting tank (7) has a feedback line (11) which can be connected to the process (8) such that, in order to keep constant the overpressure in the collecting tank (7), excess process gas can be fed back into the process (8).

2. Bearing system according to Claim 1,
wherein a filter device (13) is provided in the feedback line (11) in order to filter out lubricating fluid from the process gas.

3. Bearing system according to Claim 1 or 2,
wherein the charge line (9) has a throttle member (10) and/or the feedback line (11) has a pressure-increasing device (14).

4. Bearing system according to Claim 3,
wherein the pressure-increasing device (14) is a piston compressor.

5. Bearing system according to one of Claims 1 to 4,
wherein the bearing system (2) has a process-side shaft seal (6) which isolates the bearing (4) on the process side (3) and for which there is provided a supply line (17) via which lubricating fluid for sealing the process-side shaft seal (6) can be supplied to the latter.

6. Bearing system according to Claim 5,
wherein the bearing system (2) has a bearing seal housing (26) which houses the bearing (4) and the shaft seals (5, 6) and which is closed with the exception of inlets and outlets.

7. Bearing system according to Claim 5 or 6,
wherein the bearing system (2) has a leakage discharge line (23) which allows leakage of process gas and lubricating fluid to be guided from the process-side shaft seal (6) to the collecting tank (7).

8. Bearing system according to Claim 7,
wherein there is provided, in the leakage discharge line (23), a separator (24) for separating, from the leakage, the lubricating fluid which can be conveyed via the leakage discharge line (23) into the collecting tank (7).

9. Bearing system according to Claim 8,
wherein the separator (24) is coupled to the process (8) such that the process gas separated by the separator (24) can be fed to the process (8).

10. Turbocompressor having a bearing system (2) according to one of Claims 1 to 9.

## Revendications

1. Système de palier pour un turbocompresseur ( 1 ) intégré dans un processus ( 8 ) de compression d'un gaz de processus, comprenant un palier ( 4 ) lubrifié par un fluide lubrifiant pour le montage d'un rotor du turbocompresseur ( 1 ), une étanchéité ( 5 ) d'arbre du côté de l'atmosphère, par laquelle le palier ( 4 ) est isolé du côté de l'atmosphère, et une cuve ( 7 ) collectrice de mise à disposition du fluide lubrifiant pour la lubrification du palier ( 4 ), qui a un conduit ( 15 ) de retour du fluide lubrifiant du palier ( 4 ) à la cuve ( 7 ) collectrice et un conduit ( 9 ) d'alimentation qui peut être raccordé au processus ( 8 ) de manière à ce que le fluide lubrifiant dans la cuve ( 7 ) collectrice, et ainsi le conduit ( 15 ) de retour, soit chargé avec une surpression par le gaz de processus, **caractérisé en ce que** la cuve ( 7 ) collectrice a un conduit ( 11 ) de retour qui peut être raccordé au processus ( 8 ) de manière à ce que, pour maintenir constante la surpression dans la cuve ( 7 ) collectrice, du gaz de processus en excès puisse être retourné au processus ( 8 ).

2. Système de palier suivant la revendication 1,
dans lequel il est prévu, dans le conduit ( 11 ) de retour, un dispositif ( 13 ) de filtration pour séparer du fluide de lubrification du gaz de processus.

3. Système de palier suivant la revendication 1 ou 2,
dans lequel le conduit ( 9 ) d'alimentation a un organe ( 10 ) d'étranglement et/ou le conduit ( 11 ) de retour a un dispositif ( 14 ) de mise en pression.

4. Système de palier suivant la revendication 3,
dans lequel le dispositif ( 14 ) de mise en pression est un compresseur à piston.

5. Système de palier suivant l'une des revendications 1 à 4,
dans lequel le système de palier a une étanchéité ( 6 ) d'arbre du côté du processus, par laquelle le palier ( 4 ) est isolé du côté ( 3 ) du processus et pour laquelle il est prévu un conduit ( 17 ) d'apport par l'intermédiaire duquel du fluide de lubrification peut, pour fermer l'étanchéité ( 6 ) d'arbre du côté du processus, être envoyé à celle-ci.

6. Système de palier suivant la revendication 5,
dans lequel le système ( 2 ) de palier a un carter ( 26 ) d'étanchéité d'arbre, dans lequel le palier ( 4 ) et les étanchéités ( 5, 6 ) d'arbre sont logés et qui est fermé à l'exception d'entrées et de sorties.

7. Système de palier suivant la revendication 5 ou 6,
dans lequel le système ( 2 ) de palier a un conduit ( 23 ) d'évacuation de fuite, par lequel une fuite de gaz de processus et de fluide de lubrification peut être envoyée de la garniture ( 6 ) d'arbre du côté du processus à la cuve ( 7 ) collectrice.

8. Système de palier suivant la revendication 7,
dans lequel il est prévu dans le conduit ( 23 ) d'évacuation de fuite un séparateur ( 24 ) pour séparer le fluide de lubrification de la fuite, fluide qui peut être envoyé à la cuve ( 7 ) collectrice par l'intermédiaire du conduit ( 23 ) d'évacuation de fuite.

9. Système de palier suivant la revendication 8,
dans lequel le séparateur ( 24 ) est couplé au processus ( 8 ) de manière à ce que le gaz de processus séparé par le séparateur ( 24 ) puisse être renvoyé au processus ( 8 ).

10. Turbocompresseur ayant un système ( 2 ) de palier suivant l'une des revendications 1 à 9.
